(19) Europäisches Patentamt

European Patent Office

Office européen des brevets

(11) **EP 0 949 280 B1**

(12) **EUROPEAN PATENT SPECIFICATION**

(45) Date of publication and mention
of the grant of the patent:
**04.06.2003 Bulletin 2003/23**

(51) Int Cl.[7]: **C08F 10/00**

(21) Application number: **99301891.0**

(22) Date of filing: **12.03.1999**

(54) **Heat treatment of ziegler-natta catalysts to increase activity in solution polymerization process**

Wärmebehandlung von Ziegler-Katalysatoren zur Erhöhung der Aktivität im
Polymerisationslösungsprozess

Traitement de chauffage des catalyseurs de Ziegler-Natta pour augmenter l' activité dans le
processus de polymérisation en solution

(84) Designated Contracting States:
**DE FR GB IT NL**

(30) Priority: **07.04.1998 CA 2234188**

(43) Date of publication of application:
**13.10.1999 Bulletin 1999/41**

(73) Proprietor: **Nova Chemicals (International) S.A.
1752 Villars-sur Glâne 1 (CH)**

(72) Inventor: **Jaber, Isam
Calgary, Alberta T2E 4T5 (CA)**

(74) Representative: **Harrison, David Christopher et al
MEWBURN ELLIS
York House
23 Kingsway
London WC2B 6HP (GB)**

(56) References cited:
**EP-A- 0 529 977        WO-A-93/07188
US-A- 4 252 670        US-A- 5 602 218**

**Description**

The present invention relates to a process for the heat treatment of Ziegler-Natta catalyst systems which also contain magnesium. The catalyst system comprises a mixture of (i) an aluminum alkyl compound and a dialkyl magnesium compound; (ii) an alkyl halide; (iii) titanium tetrachloride and (iv) a dialkyl aluminum alkoxide. The catalyst systems are prepared by mixing three of the above components and heat treating them at a temperature from $50°C$ to $100°C$ for a time from 2 to 30 minutes. The resulting catalysts are particularly useful as catalyst systems used in the solution polymerization of alpha olefins and particularly for the polymerization of co- and homopolymers of ethylene. The catalysts have increased activity for the formation of both the ethylene homopolymer and the ethylene copolymer of about 60%. In some instances the catalyst also provide about a 30% increase in the weight average molecular weight in each of these portions of the resulting polymer.

United States patents 5,589,555, Zboril et al., issued December 31, 1996 and 5,519,098, Brown et al., issued May 21, 1996, both assigned to Novacor Chemicals (International) S.A., (now NOVA Chemicals (International) S.A.) disclose catalysts for the solution polymerization of alpha olefins. The patents disclose a catalyst system comprising:

(i) a mixture of a trialkyl aluminum compound and a dialkyl magnesium compound;
(ii) a reactive chloride which may be an alkyl halide;
(iii) a transition metal compound; and
(iv) the reaction product of a trialkyl aluminum compound and an alcohol in amounts up to about stoichiometric amounts to produce a dialkyl aluminum atkoxide.

The present invention has removed the step in the process of the above patents of the reaction of a trialkyl aluminum compound with an alcohol. Additionally, the patent teaches against the subject matter of the present patent application as the patent teaches cooling the precursor for a period of time from 5 seconds to 60 minutes then heating the catalyst.

United States patent 4,097,659 issued June 27, 1978 to Creemers et al., assigned to Stamicarbon, N.V., now expired, discloses a process for producing polyolefins in which a precursor is prepared by reacting an aluminum alkyl halide of the formula $R_mAlX_{3-m}$ with an organomagnesium compound of the formula $MgR'_2$ wherein m is a value less than 3; that is the aluminum compound may have 1, 2 or 3 halogen atoms, and R and R' independently may be a $C_{1-30}$ hydrocarbyl radical. The Creemers patent does not teach or suggest that the first component could be the reaction product of a trialkyl aluminum compound and a dialkyl magnesium compound. In fact the patent teaches against such a system as illustrated by the comparative example in which the first component is prepared by reacting trimethyl aluminum and dibutyl magnesium. The resulting reaction product is then reacted with a transition metal compound. The resulting precursor is then activated with an organoaluminum activator selected from the group consisting of trialkyl aluminum, an alkyl aluminum halide and an alkyl aluminum hydride. Creemers does not teach nor suggest that the activator could be a dialkyl aluminum alkoxide. Further, like Brown, Creamers suggests cooling the step in the process when the aluminum compound is reacted with the magnesium compound. In short, the patent teaches away from the subject matter of the present invention.

United States patent 4,314,912 issued February 9, 1982 to Lowery, Jr. et al., assigned to The Dow Chemical Company, teaches a catalyst which is a reaction product of a transition metal, an organomagnesium compound, and a non-metallic monohalide. In the catalyst the ratio of Mg:Transition metal is from 5:1 to 2000:1; Mg:X is from 0.1:1 to 1:1 (e.g. 1:10 to 1:1) and the ratio X:transition metal is from about 40:1 to 2000:1. In the catalysts of the present invention the ratio of X to Mg is about 2:1 and the ratio of Mg:transition metal is about 8:1. Accordingly the ratio of X to transition metal is about 16:1 which is well below the amount specified in the Lowery patent. Lowery teaches mixing the catalyst components at a temperature from about $-50°C$ to $150°C$ but that the period of time for mixing the components is not critical as the reaction occurs within one minute. Lowery teaches away from the subject matter of the present invention.

United States patent 4,431,784 issued February 14, 1984 to Hamilton et al. teaches the heat treatment of a catalyst. The catalyst is prepared by mixing the first two components (i.e. an organoaluminum and a titanium compound) at a temperature below ambient ($30°C$) and then heating the resulting mixture to a temperature from $150°C$ to $300°C$ for a period of time from 10 seconds to 10 minutes. Then a subsequent aluminum compound is added to the reactants and the catalyst is complete. In addition to teaching a different temperature cycle, Hamilton teaches a catalyst which does not contain any magnesium compound.

The present invention seeks to provide a catalyst useful in high temperature solution polymerization which provides a high activity rate for ethylene homopolymer and ethylene $C_{3-12}$ copolymer. Due to high temperature and moderately high pressure in the solution process for polyethylene, it is very challenging to increase the catalyst activity and simultaneously produce high molecular weight resins. Most often, catalyst modification may lead to increased catalyst activity, but with a significant loss in polymer molecular weight. On the other hand, catalyst modification may lead to higher polymer molecular weight but with deterioration in catalyst activity. The present invention provides a novel catalyst preparation method that substantially increases the catalyst activity, in both homo- and co-polymerization of ethylene with alpha olefins, without any loss in polymer molecular weight; on the contrary, about 30% increase in the polymer molecular weight may be obtained.

Accordingly, the present invention seeks to provide a process to prepare a catalyst for the solution polymerization of a mixture of one or more linear $C_{2-12}$ alpha olefins at a temperature from 105°C to 320°C and a pressure from 4 to 20 MPa wherein said catalyst comprises:

(i) a mixture of an alkyl aluminum compound of the formula $(R^1)_3Al^1$ and $(R^2)_2Mg$ wherein $R^1$ is a $C_{1-10}$ alkyl radical and $R^2$ is a $C_{1-10}$ alkyl radical in a molar ratio of Mg to $Al^1$ from 4.0:1 to 8:1;

(ii) a halide of the formula $R^3X$ wherein $R^3$ is selected from the group consisting of $C_{1-8}$ alkyl radicals and X is selected from the group consisting of chlorine and bromine;

(iii) titanium tetrachloride; and

(iv) an alkyl aluminum alkoxide compound of the formula $(R^4)_2Al^2OR^5$ wherein $R^4$ and $R^5$ are independently selected from the group consisting of $C_{1-10}$ alkyl radicals,

to provide a molar ratio of Mg:Ti from 4:1 to 8:1; a molar ratio of $Al^1$ to titanium tetrachloride from 0.9:1 to 1.5:1; a molar ratio of halide to Mg from 1.9:1 to 2.6:1; and a molar ratio of $Al^2$ to titanium from 2:1 to 4:1 comprising mixing in an inert hydrocarbon in a first reactor, at least the halide, the magnesium and one aluminum compound maintaining them at a temperature from 50°C to 100°C for a period of time from 2 to 30 minutes and adding the remaining catalyst component to the heat treated mixture or directly to the polymerization reactor.

In a further embodiment, the present invention provides a process for the solution polymerization of a mixture consisting of at least 40 weight % of ethylene and up to 60 weight % of one or more $C_{3-12}$ olefins comprising contacting said monomer mixture in a hydrocarbon solvent at a temperature from 105°C to 320°C and a pressure from 4 to 20 MPa in a chain of at least two continuous stirred tank reactors connected in series where the first reactor is used to react catalyst components and the subsequent reactors are for polymerization under conditions to maintain the polymer in solution with a catalyst prepared as described herein.

There are a number of types of polymers of alpha olefins which may be made. For example the polymer may be a liquid polymer or a waxy polymer having a low molecular weight. On the other hand, the polymer may have a very high molecular weight and have excellent physical properties but may be difficult to process. The present invention is directed to "useful" polymers of alpha olefins. In practical terms, the polymer should have a melt index as determined by ASTM D-1238 (190°C / 2.16 kg) of up to 200 dg/min. ASTM means the American Standard Test Method and the conditions of the test are at 190°C and under a load of 2.16 kg. While the melt index may be fractional, the lowest melt index would be that useful for extrudable polymers. Typical ranges would include melt indexes from 0.1 to 150, most typically from 0.1 to 120 dg/min.

The process of the present invention may be used to prepare homopolymers of ethylene and copolymers of ethylene and higher alpha-olefins having densities in the range of, for example, about 0.900 - 0.970 g/cm$^3$ and especially 0.910- 0.965 g/cm$^3$; the polymers of higher density e.g. about 0.960 and above, being homopolymers. Such polymers may have a melt index, as measured by the method of ASTM D-1238, condition E, in the range of for example, 0.1- 200 dg/min, typically from about 0.1 to 150 dg/min., and especially in the range of about 0.1 to 120 dg/min. The polymers may be manufactured with narrow or broad molecular weight distribution. For example, the polymers may have a stress exponent, a measure of the molecular weight distribution, in the range of about 1.1 - 2.5 and especially in the range of about 1.3 - 2.0. Stress exponent is determined by measuring the throughput of a melt indexer at two stresses (2160 g and 6480 g loading) using the procedures of the ASTM melt index test method, and the following formula:

$$\text{Stress Exponent} = 1 / (0.477) \text{ X (Log. wt extruded with 6480g}$$

$$\text{weight) / (wt. extruded with 2160 g wt.)}$$

Stress exponents values of less than about 1.40 indicate narrow molecular weight distribution while values above about 1.70 indicate broad molecular weight distribution.

The present invention is directed to a process for the preparation of useful polymers of alpha-olefins, such polymers being intended for fabrication into articles by extrusion, injection molding, thermoforming, rotational molding and the like. In particular, the polymers of alpha-olefins are homopolymers of ethylene and copolymers of ethylene and higher alpha-olefins, i.e. alpha-olefins of the ethylene series, especially such higher alpha-olefins having 3 to 12 carbon atoms, i.e. $C_{3-12}$ alpha-olefins, examples of which include 1-butene, 1-hexene, and 1-octene. The preferred higher alpha olefins have 4 - 10 carbon atoms. In addition cyclic endomethlenic dienes may be fed to the process with the ethylene or mixtures of ethylene and $C_{3-12}$ alpha-olefin. The monomer feed typically comprises at least 40 weight % of ethylene and up to 60 weight % of one or more comonomers selected from the group consisting of $C_{3-12}$ olefins. Such polymers are known *per se.*

In the process of the present invention, monomer, generally one or more hydrocarbyl monomers, a coordination catalyst and inert hydrocarbon solvent, and optionally, hydrogen, are fed to a reactor. The monomer may be ethylene or mixtures of ethylene and at least one $C_{3-12}$ alpha-olefin, preferably ethylene or mixtures of ethylene and at least one $C_{4-10}$ alpha-olefin.

The solvent used in the preparation of the coordination catalyst is an inert $C_{6-10}$ hydrocarbon which may be unsubstituted or substituted by a $C_{1-4}$ alkyl radical, such as a hydrocarbon that is inert with respect to the coordination catalyst. Such solvents are known and include for example, hexane, heptane, octane, cyclohexane, methylcyclohexane, and hydrogenated naphtha. The solvent used in the preparation of the catalyst is preferably the same as that fed to the reactor for the polymerization process. Caution should be exercised in selecting a solvent as a saturated monomer is not desired as a solvent for the reaction (i.e. hexane would not be preferred solvent for a hexene containing monomer).

The process of the present invention may be practiced over a wide range of temperatures that may be used in an alpha-olefin polymerization process operated under solution conditions. For example such polymerization temperatures may be in the range of 105°C to 320°C, preferably in the range of 130°C to 250°C, most preferably in the range from 140°C to 230°C. However one of the considerations in selecting the temperature is that the polymer should remain in solution.

The pressures used in the process of the present invention are those known for solution polymerization processes, for example, pressures in the range of about 4 - 20 MPa, preferably from 8 to 20 MPa.

In the process of the present invention, the alpha-olefin monomers are polymerized in the reactor in the presence of the catalyst. Pressure and temperature are controlled so that the polymer formed remains in solution.

Optionally, small amounts of hydrogen, for example 0 - 100 parts per million, based on the total solution fed to the reactor may be added to the feed in order to improve control of the melt index and/or molecular weight and thus aid in the production of a more uniform product, as is disclosed in Canadian Patent 703,704.

The catalysts of the present invention have improved activity over prior Mg/Al/Ti catalysts and particularly those used in solution processes at temperatures between 105°C and 320°C. The catalyst activity is defined as:

$$Kp = (Q/(1-Q))(1/HUT)(1/\text{catalyst concentration})$$

wherein:

Q is the fraction of ethylene monomer converted;
HUT is the reactor hold-up time expressed in minutes; and
catalyst concentration is the concentration in the polymerization reactor expressed in mmol/l.

The coordination catalyst is formed from four components.

The first component is a mixture of an alkyl aluminum compound of the formula $(R^1)_3Al$ wherein $R^1$ is a $C_{1-10}$, preferably a $C_{1-4}$ alkyl radical and a dialkyl magnesium compound of the formula $(R^2)_2Mg$ wherein each $R^2$ is independently (i.e. each $R^2$ may be the same or different) a $C_{1-10}$, preferably a $C_{2-6}$, alkyl radical. The molar ratio of Mg to $Al^1$ in the first component may be from 4.0:1 to 8:1 preferably from 6:1 to 8:1. In a particularly preferred embodiment of the present invention the aluminum compound is triethyl aluminum.

The second component in the catalyst system according to the present invention is a reactive alkyl halide (reactive halide) of the formula $R^3X$ wherein $R^3$ is a $C_{1-8}$, preferably a $C_{1-4}$, alkyl radical and X is a halide selected from the group consisting of chlorine and bromine. Preferably, the second component is t-butyl halide, most preferably t-butyl chloride.

The third component in the catalyst of the present invention is $TiCl_4$. In the catalysts of the present invention the molar ratio of Mg: Ti is from 4:1 to 8:1, preferably from 6:1 to 8:1.

The fourth component in the catalyst of the present invention is an alkyl aluminum alkoxide of the formula $(R^4)_2Al^2OR^5$ wherein $R^4$ and $R^5$ are independently selected from the group consisting of $C_{1-8}$, preferably $C_{1-4}$ alkyl radicals. A useful dialkyl aluminum alkoxide is diethyl aluminum ethoxide.

The components of the catalyst system are mixed to provide a molar ratio of Mg:Ti from 4:1 to 8:1, preferably from 6:1 to 8:1; a molar ratio of $Al^1$ (e.g. aluminum alkyl) to Ti from 0.9:1 to 1.5:1, preferably from 1:1 to 1.3:1; a molar ratio of (reactive) halide to Mg from 1.9:1 to 2.6:1, preferably from 1.9:1 to 2.5:1 and a molar ratio of $Al^2$ (alkyl aluminum alkoxide) to titanium from 2:1 to 4:1, preferably from 3:1 to 4:1.

At least the halide, the magnesium and one aluminum compound of the catalyst system are mixed together at once, generally the first components are mixed together, and heated at a temperature from 50°C to 100°C, preferably from 60°C to 100°C, most preferably from 70°C to 100°C for a time from 2 to 30 minutes, preferably from 5 to 20 minutes. However, all four catalyst components may be mixed in the first continuously stirred reactor.

The catalyst system of the present invention is used in the process of the invention without separation of any of the components of the catalyst. In particular, neither liquid nor solid fractions are separated from the catalyst before it is fed to the reactor. In addition, the catalyst and its components are not slurries. All the components are easy-to-handle, storable, stable liquids.

The solvent containing monomers, catalyst or catalyst components, and optionally, hydrogen, are fed to the reactor and reacted under good mixing conditions for a short period of time, preferably less than 10 minutes.

The solution passing from the polymerization reactor is normally treated to deactivate any catalyst remaining in the solution. A variety of catalyst deactivators are known, examples of which include fatty acids, alkaline earth metal salts of aliphatic carboxylic acids, and alcohols. The hydrocarbon solvent used for the deactivator is preferably the same as the solvent used in the polymerization process. If a different solvent is used, it must be compatible with the solvent used in the polymerization mixture and not cause adverse effects on the solvent recovery system associated with the polymerization process. The solvent may then be flashed off from the polymer, which subsequently may be extruded into water and cut into pellets or other suitable comminuted shapes. The recovered polymer may then be treated with saturated steam at atmospheric pressure to, for example, reduce the amount of volatile materials and improve polymer color. The treatment may be carried out for about 1 to 6 hours, following which the polymer may be dried and cooled with a stream of air for 1 to 4 hours.

Pigments, antioxidants, UV screeners, hindered amine light stabilizers and other additives may be added to the polymer either before or after the polymer is formed into pellets or other comminuted shapes. The antioxidant incorporated into polymer obtained from the process of the present invention may, in embodiments, be a single antioxidant, e.g. hindered phenolic antioxidant, or a mixture of antioxidants, e.g. a hindered phenolic antioxidant combined with a secondary antioxidant, e.g. phosphite. Both types of antioxidant are known in the art. For example the ratio of phenolic antioxidant to secondary antioxidant may be in the range of 0.1:1 to 5:1 with the total amount of antioxidant being in the range of 200 to 3000 ppm.

Preferred embodiments are the subjet matter of the dependent claims.

The present invention will now be illustrated by the following nonlimiting examples. Unless otherwise indicated parts means part by weight and percent (%) is weight percent. In the following examples, unless indicated otherwise, the compound to give $Al^1$ was triethyl aluminum; the magnesium compound was n-dibutyl magnesium; $TiCl_4$; the halide compound was t-butyl chloride; and the compound providing the $Al^2$ was diethyl aluminum ethoxide.

Example 1

The following examples were conducted in a small scale continuous polymerization unit. In the examples, both homo- and co- polymers were prepared. The catalyst in accordance with the present invention was prepared by feeding all or three of the four components in a first continuous stirred tank reactor. The fourth component was either added at the exit of the first reactor or directly to the second continuous stirred reactor. The monomer(s) were fed continuously to the second continuous reactor. In the experiments, the second continuous reactor was operated at a temperature of about 200°C. The temperature of the first continuously stirred reactor is specified in table 1 below. In the experiments, the catalyst for the homopolymer and copolymer were prepared using the same conditions. For convenience, the catalyst mixing temperature for both the homopolymer and copolymer runs is listed in the first column. For each run (homopolymer and copolymer), the catalyst reactivity (Kp) and the density and molecular weight for the resulting polymer was measured. In the experiments, $TiCl_4$ was used; the halide was t-butyl chloride; the first aluminum $(Al^1)$ compound was triethyl aluminum mixed with di-n-butyl magnesium (Magala); and the second aluminum compound $(Al^2)$ was diethyl aluminum ethoxide.

**TABLE 1**

| Mixing Temp./°C | Homopolyethylene | | | | Ethylene/1 - Octene Copolymer | | | |
|---|---|---|---|---|---|---|---|---|
| | Run # | Kp / L.mmol.min | Molecular Weight | Density g/cc | Run # | Kp / L.mmol.min | Molecular Weight | Density g/cc |
| None | 1 | 168 | 79,000 | 0.9522 | 5 | 106 | 49,000 | 0.9254 |
| 40 | 2 | 168 | 72,000 | 0.9558 | 6 | 106 | 49,000 | 0.9262 |
| 70 | 3 | 243 | 80,000 | 0.9537 | 7 | 148 | 60,000 | 0.9269 |
| 100 | 4 | 269 | 87,000 | 0.9517 | 8 | 140 | 65,000 | 0.9305 |

Polymer weight average molecular weight (Mw) was determined by Gel Permeation Chromatography (GPC).

Runs #1 and 5 (control):

All catalyst components were fed continuously, mixed in-line (without heating) for about 30-120 seconds. Catalyst molar ratios: Mg/Ti = 7.68, Mg/ $Al^1$ = 7.68, Cl/Mg = 2.0, $Al^1$/Ti = 1.0 and $Al^2$/Ti = 3.0

Runs # 2 to 4 and 6 to 8:

Transition Metal (TiCl$_4$), $(R^1)_3$; $Al^1$ / $(R^2)_2$Mg mixture; and $R^3$X halide were mixed in the first continuos stirred reactor for 10 minutes. The second aluminum compound $(R^4)_2Al^2$ OR$^5$ was fed separately to polymerization reactor (second reactor).
In runs 2 to 4 and 6 to 8 the catalyst molar ratios were: Mg/Ti = 6.87, Mg/$Al^1$ = 6.87, Cl/Mg = 2.0, $Al^1$/Ti = 1.0 and $Al^2$/Ti = 3.0.
Mixing and heating the catalyst as shown in runs 3, 4, 7 and 8 results in an increased activity (Kp), in both homopolymers and copolymers and an improved homo- and co-polymer molecular weight.

## Claims

1. A process to prepare a catalyst for the solution polymerization of a mixture of one or more linear $C_{2-12}$ alpha olefins at a temperature from 105°C to 320°C and a pressure from 4 to 20 MPa wherein said catalyst comprises:

   (i) a mixture of an alkyl aluminum compound of the formula $(R^1)_3Al^1$ and $(R^2)_2$Mg wherein $R^1$ is a $C_{1-10}$ alkyl radical and $R^2$ is a $C_{1-10}$ alkyl radical in a molar ratio of Mg to $Al^1$ from 4.0:1 to 8:1;
   (ii) a halide of the formula $R^3$X wherein $R^3$ is selected from the group consisting of $C_{1-8}$ alkyl radicals and X is selected from the group consisting of chlorine and bromine;
   (iii) titanium tetrachloride; and
   (iv) an alkyl aluminum alkoxide compound of the formula $(R^4)_2Al^2OR^5$ wherein $R^4$ and $R^5$ are independently selected from the group consisting of $C_{1-10}$ alkyl radicals,

   to provide a molar ratio of Mg:Ti from 4:1 to 8:1; a molar ratio of $Al^1$ to titanium tetrachloride from 0.9:1 to 1.5:1; a molar ratio of halide to Mg from 1.9:1 to 2.6:1; and a molar ratio of $Al^2$ to titanium from 2:1 to 4:1 comprising mixing in an inert hydrocarbon in a first reactor, at least the halide, the magnesium and one aluminum compound maintaining them at a temperature from 50°C to 100°C for a period of time from 2 to 30 minutes and adding the remaining catalyst component to the heat treated mixture or directly to the polymerization reactor.

2. The process according to claim 1, wherein the mole ratio of $Al^1$ to Ti is from 1:1 to 1.3 to 1.

3. The process according to claim 2, wherein the mole ratio of halide to Mg is from 1.9:1 to 2.5:1.

4. The process according to claim 3, wherein the mole ratio of Mg to $Al^1$ is from 6:1 to 8:1.

5. The process according to claim 4, wherein the mole ratio of Mg to Ti is from 6:1 to 8:1.

6. The process according to claim 5, wherein the mole ratio of $Al^1$ to Ti is from 0.9:1 to 1.1 to 1

7. The process according to claim 6, wherein the mole ratio of $Al^2$ to Ti is from 3:1 to 4:1.

8. The process according to claim 7, wherein the catalyst mixing temperature is from 60°C to 100°C.

9. The process according to claim 8, wherein the catalyst mixing time in the first reactor is from 5 to 20 minutes.

10. The process according to claim 9, wherein the titanium compound, the mixture of the $Al^1$ compound and the magnesium compound, and the halide compound, are initially mixed and heat treated.

11. The process according to claim 10, wherein $R^1$, $R^3$, $R^4$ and $R^5$ are independently selected from the group consisting of $C_{1-4}$ alkyl radicals.

12. The process according to claim 11, wherein $R^1$ is an ethyl radical.

**13.** The process according to claim 12, wherein $R^2$ is a $C_{2-6}$ alkyl radical.

**14.** The process according to claim 13, wherein $R^3$ is a tertiary butyl radical.

**15.** The process according to claim 14, wherein $R^4$ and $R^5$ are ethyl radicals.

**16.** The process according to claim 10, wherein the $Al^2$ compound is added directly to the polymerization reactor.

**17.** The process according to claim 15, wherein the $Al^2$ compound is added directly to the polymerization reactor.

**18.** The process according to claim 10, wherein the $Al^2$ compound is added to the transfer between the first and second reactor.

**19.** The process according to claim 15, wherein the $Al^2$ compound is added to the transfer between the first and second reactor.

**20.** The process according to claim 9, wherein all of the catalyst components are mixed and heat treated in the first continuously stirred reactor.

**21.** The process according to claim 20, wherein $R^1$ is an ethyl radical.

**22.** The process according to claim 21, wherein $R^2$ is a $C_{2-6}$ alkyl radical.

**23.** The process according to claim 22, wherein $R^3$ is a tertiary butyl radical.

**24.** The process according to claim 23, wherein $R^4$ and $R^5$ are ethyl radicals.

**25.** A process for the solution polymerization of a mixture comprising at least 40 weight % of ethylene and up to 60 weight % of one or more $C_{3-12}$ alpha olefins at a temperature from 105°C to 320°C and a pressure from 4 to 20 MPa in a chain of at least two continuous stirred reactors connected in series where the first reactor is used to react catalyst components and the subsequent reactors are for polymerization and the catalyst is prepared according to any one of the preceding claims.

**Patentansprüche**

**1.** Verfahren zur Herstellung eines Katalysators zur Lösungspolymerisation eines Gemischs aus einem oder mehreren linearen $C_{2-12}$-$\alpha$-Olefinen bei einer Temperatur von 105 °C bis 320 °C und einem Druck von 4 bis 20 MPa, worin der Katalysator Folgendes umfasst:

(i) ein Gemisch aus einer Alkylaluminiumverbindung der Formel $(R^1)_3Al^1$ und $(R^2)_2Mg$, worin $R^1$ ein $C_{1-10}$-Alkylrest ist und $R^2$ ein $C_{1-10}$-Alkylrest ist, in einem Molverhältnis zwischen Mg und $Al^1$ von 4,0:1 bis 8:1;
(ii) ein Halogenid der Formel $R^3X$, worin $R^3$ aus der aus $C_{1-8}$-Alkylresten bestehenden Gruppe ausgewählt ist und X aus der aus Chlor und Brom bestehenden Gruppe ausgewählt ist;
(iii) Titantetrachlorid; und
(iv) eine Alkylaluminiumalkoxidverbindung der Formel $(R^4)_2Al^2OR^5$, worin $R^4$ und $R^5$ unabhängig voneinander aus der aus $C_{1-10}$-Alkylresten bestehenden Gruppe ausgewählt sind,

um ein Molverhältnis Mg:Ti von 4:1 bis 8:1; ein Molverhältnis zwischen $Al^1$ und Titantetrachlorid von 0,9:1 bis 1,5:1; ein Molverhältnis zwischen Halogenid und Mg von 1,9:1 bis 2,6:1; und ein Molverhältnis zwischen $Al^2$ und Titan von 2:1 bis 4:1 bereitzustellen, umfassend das Vermischen zumindest des Halogenids, des Magnesiums und einer Aluminiumverbindung in einem inerten Kohlenwasserstoff in einem ersten Reaktor, wobei sie für einen Zeitraum von 2 bis 30 min bei einer Temperatur von 50 °C bis 100 °C gehalten werden, und das Zuführen der verbleibenden Katalysatorkomponente zum wärmebehandelten Gemisch oder direkt zum Polymerisationsreaktor.

**2.** Verfahren nach Anspruch 1, worin das Molverhältnis zwischen $Al^1$ und Ti 1:1 bis 1,3:1 beträgt.

**3.** Verfahren nach Anspruch 2, worin das Molverhältnis zwischen Halogenid und Mg 1,9:1 bis 2,5:1 beträgt.

EP 0 949 280 B1

**4.** Verfahren nach Anspruch 3, worin das Molverhältnis zwischen Mg und Al[1] 6:1 bis 8:1 beträgt.

**5.** Verfahren nach Anspruch 4, worin das Molverhältnis zwischen Mg und Ti 6:1 bis 8:1 beträgt.

**6.** Verfahren nach Anspruch 5, worin das Molverhältnis zwischen Al[1] und Ti 0,9:1 bis 1,1:1 beträgt.

**7.** Verfahren nach Anspruch 6, worin das Molverhältnis zwischen Al[2] und Ti 3:1 bis 4:1 beträgt.

**8.** Verfahren nach Anspruch 7, worin die Katalysatormischtemperatur 60 °C bis 100 °C beträgt.

**9.** Verfahren nach Anspruch 8, worin die Katalysatormischzeit im ersten Reaktor 5 bis 20 min beträgt.

**10.** Verfahren nach Anspruch 9, worin anfänglich die Titanverbindung, das Gemisch aus der Al[1]-Verbindung und der Magnesiumverbindung sowie die Halogenidverbindung vermischt und wärmebehandelt werden.

**11.** Verfahren nach Anspruch 10, worin $R^1$, $R^3$, $R^4$ und $R^5$ unabhängig voneinander aus der aus $C_{1-4}$-Alkylresten bestehenden Gruppe ausgewählt sind.

**12.** Verfahren nach Anspruch 11, worin $R^1$ ein Ethylrest ist.

**13.** Verfahren nach Anspruch 12, worin $R^2$ ein $C_{2-6}$-Alkylrest ist.

**14.** Verfahren nach Anspruch 13, worin $R^3$ ein t-Butylrest ist.

**15.** Verfahren nach Anspruch 14, worin $R^4$ und $R^5$ Ethylreste sind.

**16.** Verfahren nach Anspruch 10, worin die Al[2]-Verbindung direkt dem Polymerisationsreaktor zugeführt wird.

**17.** Verfahren nach Anspruch 15, worin die Al[2]-Verbindung direkt dem Polymerisationsreaktor zugeführt wird.

**18.** Verfahren nach Anspruch 10, worin die Al[2]-Verbindung in die Überleitung zwischen dem ersten und dem zweiten Reaktor zugeführt wird.

**19.** Verfahren nach Anspruch 15, worin die Al[2]-Verbindung in die Überleitung zwischen dem ersten und dem zweiten Reaktor zugeführt wird.

**20.** Verfahren nach Anspruch 9, worin alle Katalysatorkomponenten im ersten, kontinuierlich gerührten Reaktor vermischt und wärmebehandelt werden.

**21.** Verfahren nach Anspruch 20, worin $R^1$ ein Ethylrest ist.

**22.** Verfahren nach Anspruch 21, worin $R^2$ ein $C_{2-6}$-Alkylrest ist.

**23.** Verfahren nach Anspruch 22, worin $R^3$ ein t-Butylrest ist.

**24.** Verfahren nach Anspruch 23, worin $R^4$ und $R^5$ Ethylreste sind.

**25.** Verfahren zur Lösungspolymerisation eines Gemischs, das zumindest 40 Gew.-% Ethylen und bis zu 60 Gew.-% eines oder mehrerer $C_{3-12}$-$\alpha$-Olefine umfasst, bei einer Temperatur von 105 °C bis 320 °C und einem Druck von 4 bis 20 MPa in einer Kette aus zumindest zwei kontinuierlich gerührten Reaktoren, die in Serie geschaltet sind, wobei der erste Reaktor verwendet wird, um Katalysatorkomponenten umzusetzen, und die nachfolgenden Reaktoren zur Polymerisation bestimmt sind und der Katalysator nach einem der vorhergehenden Ansprüche hergestellt ist.

**Revendications**

**1.** Procédé de préparation d'un catalyseur pour la polymérisation en solution d'un mélange d'une ou plusieurs alpha-

9

oléfines $C_{2-12}$ linéaires à une température de 105°C à 320°C et à une pression de 4 à 20 MPa où ledit catalyseur comprend :

(i) un mélange d'un composé d'alkyl aluminium de la formule $(R^1)_3Al^1$ et $(R^2)_2Mg$ où $R^1$ est un radical alkyle $C_{1-10}$ et $R^2$ est un radical alkyle $C_{1-10}$ à un rapport molaire de Mg à $Al^1$ de 4,0:1 à 8:1 ;

(ii) un halogénure de la formule $R^3X$ où $R^3$ est sélectionné dans le groupe consistant en radicaux alkyle $C_{1-8}$ et X est sélectionné dans le groupe consistant en chlore et brome ;

(iii) du tétrachlorure de titane ; et

( iv) un composé d' alcoolate d'alkyl aluminium de la formule $(R^4)_2Al^2OR^5$ où $R^4$ et $R^5$ sont indépendamment sélectionnés dans le groupe consistant en radicaux alkyle $C_{1-10}$,

pour produire un rapport molaire de Mg:Ti de 4:1 à 8:1 ; un rapport molaire de $Al^1$ au tétrachlorure de titane de 0, 9 : 1 à 1,5:1 ; un rapport molaire de l'halogénure à Mg de 1,9:1 à 2,6:1 ; et un rapport molaire de $Al^2$ au titane de 2:1 à 4:1, comprenant le mélange dans un hydrocarbure inerte dans un premier réacteur, au moins de l'halogénure, du magnésium et d'un composé d'aluminium, leur maintien à une température de 50°C à 100°C pendant une période de temps de 2 à 30 minutes et l'addition du composant catalyseur restant au mélange traité thermiquement ou directement au réacteur de polymérisation.

**2.** Procédé selon la revendication 1, où le rapport molaire de $Al^1$ à Ti est de 1:1 à 1,3:1.

**3.** Procédé selon la revendication 2, où le rapport molaire de l'halogénure à Mg est de 1,9:1 à 2,5:1.

**4.** Procédé selon la revendication 3, où le rapport molaire de Mg à $Al^1$ est de 6:1 à 8:1.

**5.** Procédé selon la revendication 4, où le rapport molaire de Mg à Ti est de 6:1 à 8:1.

**6.** Procédé selon la revendication 5, où le rapport molaire de $Al^1$ à Ti est de 0,9:1 à 1,1:1.

**7.** Procédé selon la revendication 6, où le rapport molaire de $Al^2$ à Ti est de 3:1 à 4:1.

**8.** Procédé selon la revendication 7, où la température de mélange du catalyseur est de 60°C à 100°C.

**9.** Procédé selon la revendication 8, où le temps de mélange du catalyseur dans le premier réacteur est de 5 à 20 minutes.

**10.** Procédé selon la revendication 9, où le composé de titane, le mélange du composé de $Al^1$ et du composé de magnésium et le composé d'halogénure sont initialement mélangés et traités thermiquement.

**11.** Procédé selon la revendication 10, où $R^1$, $R^3$, $R^4$ et $R^5$ sont indépendamment sélectionnés dans le groupe consistant en radicaux alkyle $C_{1-4}$.

**12.** Procédé selon la revendication 11, où $R^1$ est un radical éthyle.

**13.** Procédé selon la revendication 12, où $R^2$ est un radical alkyle $C_{2-6}$.

**14.** Procédé selon la revendication 13, où $R^3$ est un radical butyle tertiaire.

**15.** Procédé selon la revendication 14, où $R^4$ et $R^5$ sont des radicaux éthyle.

**16.** Procédé selon la revendication 10, où le composé de $Al^2$ est ajouté directement au réacteur de polymérisation.

**17.** Procédé selon la revendication 15, où le composé de $Al^2$ est ajouté directement au réacteur de polymérisation.

**18.** Procédé selon la revendication 10, où le composé de $Al^2$ est ajouté au transfert entre les premier et second réacteurs.

**19.** Procédé selon la revendication 15, où le composé de Al$^2$ est ajouté au transfert entre les premier et second réacteurs.

**20.** Procédé selon la revendication 9, où la totalité des composants du catalyseur sont mélangés et traités thermiquement dans le premier réacteur sous agitation continue.

**21.** Procédé selon la revendication 20, où R$^1$ est un radical éthyle.

**22.** Procédé selon la revendication 21, où R$^2$ est un radical alkyle C$_{2-6}$ .

**23.** Procédé selon la revendication 22, où R$^3$ est un radical butyle tertiaire.

**24.** Procédé selon la revendication 23, où R$^4$ et R$^5$ sont des radicaux éthyle.

**25.** Procédé pour la polymérisation en solution d'un mélange comprenant au moins 40% en poids d'éthylène et jusqu'à 60% en poids d'une ou plusieurs alpha-oléfines C$_{3-12}$ à une température de 105°C à 320°C et une pression de 4 à 20 MPa dans une chaîne d'au moins deux réacteurs sous agitation continue connectés en série, où le premier réacteur est utilisé pour la réaction des composants du catalyseur et les réacteurs subséquents sont pour la polymérisation et le catalyseur est préparé selon l'une quelconque des revendications précédentes.